(19) Europäisches Patentamt
European Patent Office
Office européen des brevets

(11) **EP 4 008 564 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **21203073.8**

(22) Anmeldetag: **18.10.2021**

(51) Internationale Patentklassifikation (IPC):
**B60B 5/02** (2006.01)    **B29C 70/28** (2006.01)
**B60B 21/00** (2006.01)    **B29C 70/20** (2006.01)
**B29C 70/30** (2006.01)    **B29C 70/86** (2006.01)
**B60B 21/10** (2006.01)

(52) Gemeinsame Patentklassifikation (CPC):
**B60B 21/00; B29C 70/207; B29C 70/30; B29C 70/865; B60B 5/02; B60B 21/104;** B60B 2360/341; B60B 2900/111; B60B 2900/311

(54) **FAHRZEUGFELGE MIT EINEM WENIGSTENS EIN FASERBÜNDEL AUFWEISENDEN FELGENKÖRPER; VERFAHREN ZU DESSEN HERSTELLUNG; SOWIE FAHRZEUGRAD**

VEHICLE RIM WITH A RIM BODY HAVING AT LEAST ONE FIBRE BUNDLE; METHOD FOR ITS MANUFACTURE; AND VEHICLE WHEEL

JANTE DE VÉHICULE DOTÉE D'UN CORPS DE JANTE COMPRENANT AU MOINS UN FAISCEAU DE FIBRES, SON PROCÉDÉ DE FABRICATION, AINSI QUE ROUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2020 DE 102020131243**

(43) Veröffentlichungstag der Anmeldung:
**08.06.2022 Patentblatt 2022/23**

(73) Patentinhaber: **Munich Composites GmbH**
**85640 Putzbrunn (DE)**

(72) Erfinder:
• **RÜGER, Olaf**
**83052 Bruckmühl (DE)**
• **MEHRING, Johannes**
**85521 Ottobrunn (DE)**

(74) Vertreter: **Winter, Brandl - Partnerschaft mbB**
**Alois-Steinecker-Straße 22**
**85354 Freising (DE)**

(56) Entgegenhaltungen:
WO-A1-2015/162173    WO-A1-2016/128289
WO-A1-2019/033169

**Beschreibung**

Die Erfindung betrifft eine Fahrzeugfelge mit einem (vorzugsweise rotationssymmetrischen) Felgenkörper aus Faserverbundmaterial, wobei der Felgenkörper zwei Felgenhornbereiche und einen die beiden Felgenhornbereiche verbindenden Felgenbettbereich aufweist, und wobei zumindest ein Felgenhornbereich durch wenigstens ein Faserbündel verstärkt ist.

Gattungsgemäße Fahrzeugfelgen sind aus dem Stand der Technik bereits hinlänglich bekannt. Beispielsweise offenbart die WO 2016/128289 A1 ein Verfahren zur Herstellung eines faserverstärkten Ringkörpers, bei dem sogenannte Rovings als Verstärkung dienen.

Bei der Herstellung gattungsgemäßer Fahrzeugfelgen hat es sich herausgestellt, dass es für eine hohe Festigkeit des Felgenhornbereiches des Felgenkörpers von großer Bedeutung ist, die zur Verstärkung eingesetzten Faserbündel möglichst kompakt auszubilden und die Einzelfasern des Faserbündels über den Umfang hinweg mit möglichst wenig Richtungswechseln verlaufen zu lassen. Bei bisherigen Verstärkungen wiesen die Einzelfasern der Faserbündel häufig zahlreiche Richtungswechsel, insbesondere in Form von Wellungen, auf, die im ausgehärteten Zustand der Felge die Festigkeit des Rades negativ beeinflussen.

Es ist daher Aufgabe der Erfindung, eine Fahrzeugfelge mit einem aus Faserverbundmaterial hergestellten Felgenkörper zur Verfügung zu stellen, der eine erhöhte Festigkeit aufweist, zugleich jedoch möglichst einfach herstellbar ist.

Dies wird erfindungsgemäß dadurch gelöst, dass das wenigstens eine Faserbündel von einer Kompressionsumhüllung umgeben ist.

Unter einer Kompressionsumhüllung ist eine Umhüllung zu verstehen, die einen radial nach innen auf das Faserbündel wirkenden Druck, unter einer möglichst engen Anlage der Einzelfasern des Faserbündels aneinander (Komprimierung), ausübt. Die Kompressionsumhüllung stellt somit eine Umhüllung dar, die mit einer bestimmten radialen Vorspannkraft das Faserbündel umgibt / komprimiert.

Durch eine derartige Kompressionsumhüllung wird die Faserdichte des Faserbündels deutlich erhöht. Durch die radiale Vorspannung wird zudem die Welligkeitsbildung deutlich reduziert bzw. gar vollständig vermieden. Dies erhöht deutlich die Festigkeit.

Weitere vorteilhafte Ausführungsformen sind mit den Unteransprüchen beansprucht und nachfolgend näher erläutert.

Demnach ist es weiterhin von Vorteil, wenn das wenigstens eine Faserbündel (in seiner Längsrichtung betrachtet) verdrillt / verdreht ist. Eine solche Verdrillung reduziert weiter die Wellenbildung, sodass die Festigkeit gesteigert wird.

Diesbezüglich hat es sich für eine einfache Herstellung auch als zuträglich herausgestellt, wenn das Faserbündel mehrere einzelne Rovings aufweist. Die Rovings sind dann bevorzugt miteinander verdrillt. Auch ist es, zusätzlich oder alternativ zu der Verdrillung der Rovings miteinander, weiter vorteilhaft, die Einzelfäden eines Rovings zu verdrillen. Dadurch kommt es zu einer weiteren Festigkeitssteigerung der Fahrzeugfelge.

Jedes Roving und/oder das wenigstens eine Faserbündel in Gänze ist vorzugsweise mit fünf bis zehn Drehungen pro Meter verdrillt.

Wenn das wenigstens eine Faserbündel mehrere, bspw. 3, 4, 5, 6, 7, 8, 9, 10, 11, 12, 13, 14, 15 oder mehr Rovings beinhaltet, die vorzugsweise miteinander, bspw. um 5, 6, 7, 8, 9 oder 10 Umdrehungen pro Meter +/- 2 bis 3, verdrillt sind, bringt das Faserbündel selber eine hervorragende Steifigkeit sowohl für die Verarbeitung, als auch für die spätere Verwendung des gesamten Felgenkörpers mit.

Vorteilhaft ist es zudem, wenn die Kompressionsumhüllung als eine Umwicklung oder eine Umflechtung ausgebildet ist. Die Kompressionsumhüllung ist somit auch als Wickelschlauch oder Flechtschlauch umgesetzt. Dadurch lässt sich eine über die Länge hinweg möglichst gleichbleibende Kompression der Einzelfasern des Faserbündels erzeugen. Auch wird dadurch eine einfache Herstellbarkeit ermöglicht.

Um den Vorgang des Umhüllens möglichst einfach zu halten, ist es auch von Vorteil, wenn die Kompressionsumhüllung zumindest zwei sich kreuzende Fäden, vorzugsweise zumindest zwei sich regelmäßig / in gleichen Abständen über die Länge des Faserbündels hinweg kreuzende Fäden, aufweist.

Für einen geeigneten Kompromiss aus einem geringen Materialanteil an Kompressionsumhüllung sowie einer hohen Kompression der Einzelfasern des Faserbündels hat es sich zudem als vorteilhaft herausgestellt, wenn ein Abstand zwischen zwei entlang einer Mantellinie des wenigstens einen Faserbündels unmittelbar aufeinanderfolgenden Kreuzungspunkten der zumindest zwei Fäden zwischen 2 mm und 8 mm, weiter bevorzugt zwischen 4 mm und 6 mm, besonders bevorzugt um die 5 mm beträgt.

Wenn die Kompressionsumhüllung aus einer Glasfaser / aus Glasfaserfäden oder thermoplastischen Fäden / Fasern besteht / ausgebildet ist, wird ein beim Herstellprozess möglichst beschädigungsfrei und einfach handelbares Material zur Verfügung gestellt. Alternativ hierzu ist es wiederum auch vorteilhaft, die Kompressionsumhüllung aus anderen Fasern, etwa Naturfasern, wie Baumwollfasern oder Hanffasern, herzustellen.

Ist das wenigstens eine Faserbündel auf einer den zumindest einen Felgenhornbereich mit ausbildenden Fasermatte, die vorzugsweise als eine NCF-Matte umgesetzt ist, aufgenäht, wird der Herstellvorgang des Felgenhornbereiches zusätzlich erleichtert, da die Fasermatte unmittelbar mit dem Faserbündel zusammen angeordnet / drapiert wird.

Als NCF-Matte ist eine Fasermatte aus NCF zu verstehen. Unter einem NCF wird wiederum eine "non-crimp fabric" verstanden. Dies ist ein Flächengebilde, das aus einer oder mehreren Lagen von parallel verlaufenden gestreckten Fäden besteht. An den Kreuzungspunkten sind die Fäden fixiert. Die Fixierung erfolgt entweder durch Stoffschluss oder mechanisch durch Reibung und / oder Formschluss, etwa durch eine Naht.

Es existieren folgende Arten von Fadengelegen (/ Fasermatten):

- monoaxiale oder unidirektionale Fadengelege, die durch das Fixieren einer Schar von parallelen Fäden entstehen;
- biaxiale Fadengelege, bei denen zwei Scharen von parallelen Fäden in Richtung von zwei Achsen fixiert werden;
- multiaxiale Fadengelege, wobei mehrere Scharen aus parallelen Fäden in Richtung verschiedener Achsen fixiert werden.

Die Fadenlagen bei mehrlagigen Gelegen können alle unterschiedliche Orientierung aufweisen, auch aus unterschiedlichen Fadendichten und unterschiedlichen Fadenfeinheiten bestehen. Im Vergleich zu Geweben haben Gelege als Verstärkungsstrukturen bekanntermaßen in Faser-Kunststoff-Verbunden, wobei dies das grundsätzliche technische Gebiet ist, auf dem die Erfindung angeordnet ist, bessere mechanische Eigenschaften, da die Fäden in gestreckter Form vorliegen und damit keine zusätzliche Strukturdehnung vorliegt und die Ausrichtung der Fäden speziell für den jeweiligen Anwendungsfall definiert werden kann.

Um besonders hochbelastbare Felgen mit entsprechendem Felgenkörper herzustellen, hat es sich bewährt, wenn die NCF-Matte ein monoaxiales / unidirektionales, oder biaxiales (z. B. +/- 45°-Fasern enthaltendes) oder multiaxiales Gelege, vorzugsweise aus Kohlefasern, Glasfasern oder Aramidfasern ist.

Damit die Fertigung zügig vonstattengeht und auf eine maschinelle Fertigung gesetzt werden kann, ist es von Vorteil, wenn das wenigstens eine Faserbündel auf der Fasermatte aufgenäht ist, bspw. mittels einer der Längsrichtung des Faserbündels und der NCF-Fasermatte folgenden Zickzack-Naht. Dabei hat es sich bewährt, wenn eine Richtungsänderung eines Nähfadens der Zickzack-Naht alle 15 mm stattfindet und die quer zur Längsrichtung des Faserbündels gemessene Breite der Naht 7 mm beträgt.

Somit ist das wenigstens eine Faserbündel bevorzugt als 0°-Bündel eingesetzt.

Weiterhin ist es von Vorteil, wenn das wenigstens eine Faserbündel zwischen $\frac{5}{12}$ bis $\frac{6}{13}$ +/- 10 % der Breite der Fasermatte von einem Längsrand der Fasermatte beab-standet ist. Auf diese Weise wird das Faserbündel außermittig positioniert, was ein Mehr an Material beim Umkrempeln / Umschlagen / Umfalten / Umstülpen Rechnung trägt.

Für eine weitere Steigerung der Festigkeit ist es des Weiteren zweckmäßig, wenn der zumindest eine Felgenhornbereich mehrere axial und/oder radial nebeneinander angeordnete Faserbündel aufweist. Als besonders bevorzugt ist es vorgesehen, zwei axial nebeneinander angeordnete (vorzugsweise parallel zueinander verlaufende) Faserbündel vorzusehen, die weiter bevorzugt auf derselben Fasermatte aufgenäht sind.

Für eine weiter vereinfachte Herstellung ist es ebenfalls zuträglich, wenn der zumindest eine Felgenhornbereich mehrere radial geschachtelte Faserbündelabschnitte (vorzugsweise desselben Faserbündels) aufweist. Dadurch ist es möglich den Felgenhornbereich unter Verwendung einer einzigen Fasermatte, etwa mit einem Faserbündel oder zwei nebeneinander angeordneten Faserbündeln, mehrschichtig aufzuwickeln.

Demnach ist es wiederum von Vorteil, wenn zwischen zwei radial unmittelbar übereinander angeordneten Faserbündelabschnitten ein Abschnitt der Fasermatte zwischengelegt / angeordnet ist.

Auch ist es zweckmäßig, wenn die einzelnen Fasermattenabschnitte schließlich in radialer Richtung nach innen mit dem Felgenbettbereich verbunden sind oder unmittelbar in diesen Felgenbettbereich übergehen. Dadurch ist der Felgenkörper in Gänze möglichst einfach herstellbar.

Das wenigstens eine Faserbündel und / oder die Fasermatte sind / ist weiter bevorzugt aus Kohlefaser hergestellt. Dadurch wird die Festigkeit weiter gesteigert. In weiteren Ausführungen sind / ist das wenigstens eine Faserbündel und / oder die Fasermatte auch aus Glasfaser oder Aramidfaser hergestellt.

Für eine weitere Verstärkung der Fahrzeugfelge ist es auch von Vorteil, wenn das Faserbündel ein Gemisch aus verschiedenen Fasermaterialien bildet oder durch zusätzliche Verstärkungskomponenten ergänzt ist. Vorzugsweise weist das Faserbündel dann zusätzlich, vorzugsweise zusätzlich zu Rovings aus Kohlefaser, Glasfaser, und/oder Aramidfaser einen Metalldraht / -garn oder mehrere einen Metalldrähte / - garne auf.

Des Weiteren betrifft die Erfindung ein Fahrzeugrad mit der erfindungsgemäßen Fahrzeugfelge nach zumindest einer der zuvor beschriebenen Ausführungen und einer mit dem Felgenkörper verbundenen, hin zu einem Nabenkörper führenden Speicheneinheit.

Zudem die Erfindung ein Verfahren zum Herstellen einer Fahrzeugfelge mit einem Felgenkörper aus Faserverbundmaterial, wobei wenigstens ein Faserbündel zur Verfügung gestellt wird, das unter Erfahrung einer Verdichtung mit einer Kompressionsumhüllung versehen wird, woraufhin das wenigstens eine Faserbündel auf einer Fasermatte aufgenäht wird, die Fasermatte mit dem wenigstens einen Faserbündel unter Ausbildung eines Felgenhornbereiches drapiert wird und schließlich der Felgenkörper ausgehärtet / konsolidiert wird.

Für eine möglichst effiziente Herstellung des Felgenkörpers ist es auch zweckmäßig, wenn der Felgenkörper durch eine erste Subpreform an einem ersten axialen Ende und eine dritte Subpreform an einem gegenüberliegenden zweiten axialen Ende, wobei eine zweite Subpreform zwischen der ersten Subpreform und der dritten Subpreform angeordnet ist, zusammengesetzt wird. Die zweite Subpreform greift dann vorzugsweise sowohl in einen durch die / in der ersten Subpreform ausgebildeten / vorhandenen vorderen Verbindungshohlraum ein als auch in einen durch die / in der dritten Subpreform ausgebildeten / vorhandenen hinteren Verbindungshohlraum ein.

Die erste Subpreform bildet im fertig hergestellten Zustand der Fahrzeugfelge einen ersten Felgenhornbereich, die dritte Subpreform einen dritten Felgenhornbereich und die zweite Subpreform den den ersten Felgenhornbereich mit dem zweiten Felgenhornbereich verbindenden Felgenbettbereich aus.

Besonders hohe Kräfte bei niedrigem Gewicht lassen sich durch den Felgenkörper dann aufnehmen, wenn die erste Subpreform und/oder die zweite Subpreform und/oder die dritte Subpreform mehrere, bspw. 3, 4, 5, 6, 7, 8 oder mehr Lagen der Fasermatte / Fasermattenabschnitte besitzt / besitzen, wobei vorzugsweise die erste Subpreform und die dritte Subpreform gleich viele Lagen besitzen und die zweite Subpreform gegenüber der ersten und dritten Subpreform unterschiedlich viele Lagen, vorzugsweise mehr Lagen als die erste Subpreform und/oder die dritte Subpreform besitzt. Gerade diese unterschiedliche Lagenverteilung wirkt sich auch positiv auf das spätere Fahrverhalten des die Fahrzeugfelge einsetzenden Fahrzeugs aus.

Das Steifigkeits- / Gewichtsverhältnis ist dann besonders vorteilhaft, wenn die erste Subpreform und/oder die dritte Subpreform 4-, 5- oder 6-lagig aufgewickelt / aufgebaut ist und/oder der zweite Subpreform 5-, 6- oder 7-lagig aufgewickelt / aufgebaut ist. Auch noch mehr Lagen, wie 8, 9, 10, etc. sind möglich.

Die Erfindung wird nun nachfolgend anhand von Figuren näher erläutert, in welchem Zusammenhang auch verschiedene Ausführungsbeispiele dargestellt sind.

Es zeigen:

Fig. 1     eine detaillierte Längsschnittdarstellung eines Felgenhornbereiches einer erfindungsgemäßen Fahrzeugfelge nach einem ersten Ausführungsbeispiel, wobei mehrere radial geschachtelte Faserbündelabschnitte und Fasermattenabschnitte gut zu erkennen sind,

Fig. 2     eine vereinfachte Längsschnittdarstellung einer erfindungsgemäßen Fahrzeugfelge nach einem zweiten Ausführungsbeispiel, in dem eine formoptimierte Ausbildung der Faserbündelabschnitte des Felgenhornbereiches veranschaulicht ist,

Fig. 3     eine vereinfachte Längsschnittdarstellung einer erfindungsgemäßen Fahrzeugfelge nach einem dritten Ausführungsbeispiel, wobei insgesamt fünf axial und radial nebeneinander angeordnete Faserbündelabschnitte, hier mit kreisförmigem Querschnitt, erkennbar sind,

Fig. 4     eine vereinfachte Längsschnittdarstellung einer erfindungsgemäßen Fahrzeugfelge nach einem vierten Ausführungsbeispiel, wobei die Faserbündelabschnitte in radialer Richtung durchgängig paarweise angeordnet sind,

Fig. 5     eine Draufsicht auf eine abgerollte Fasermatte, auf der ein Faserbündel zur Herstellung der erfindungsgemäßen Fahrzeugfelge nach Fig. 1 aufgenäht ist,

Fig. 6     eine Draufsicht auf eine abgerollte Fasermatte, auf der zwei Faserbündel zur Herstellung der erfindungsgemäßen Fahrzeugfelge nach Fig. 4 aufgenäht sind,

Fig. 7     eine Längsschnittdarstellung eines vereinfacht dargestellten Felgenkörpers der erfindungsgemäßen Fahrzeugfelge nach Fig. 1, die im Wesentlichen aus drei Subpreforms zusammengesetzt ist,

Fig. 8     eine Draufsicht auf mehrere zur Herstellung zweier Felgenhornbereiche und eines Felgenbettbereiches des Felgenkörpers verwendete Fasermatten,

Fig. 9     eine vereinfachte Darstellung zur Zusammensetzung des Felgenkörpers nach Fig. 7,

Fig. 10    eine Seitenansicht einer Aufwickelvorrichtung zum Herstellen der Fahrzeugfelge nach Fig. 1, wobei eine erste oder dritte Subpreform mit der Fasermatte, auf der ein Faserbündel befestigt ist, hergestellt wird,

Fig. 11    eine Vorderansicht der Aufwickelvorrichtung nach Fig. 8,

Fig. 12    eine perspektivische Darstellung einer Umwickelvorrichtung zum Umwickeln des erfindungsgemäß eingesetzten Faserbündels, sowie

Fig. 13    eine Längsschnittdarstellung eines vereinfacht dargestellten Fahrzeugrades aufweisend die Fahrzeugfelge nach Fig. 1.

Die Figuren sind lediglich schematischer Natur und dienen ausschließlich dem Verständnis der Erfindung. Die gleichen Elemente sind mit denselben Bezugszeichen versehen.

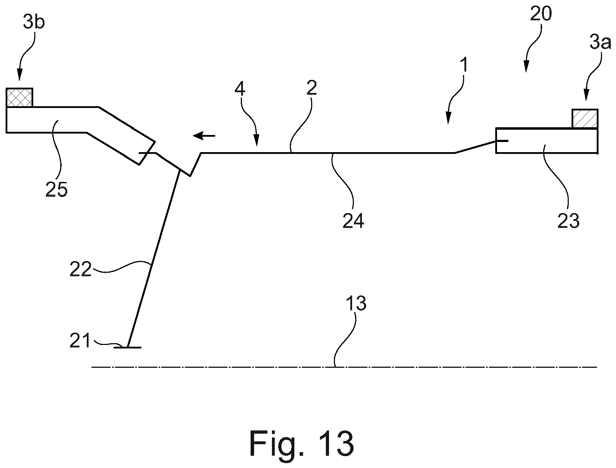

Mit Fig. 13 ist ein vereinfachter Aufbau eines Fahrzeugrades 20 aufweisend eine erfindungsgemäße Fahrzeugfelge 1 dargestellt. Neben der Fahrzeugfelge 1 weist das Fahrzeugrad 20 auf übliche Weise eine Speicheneinheit 22 auf, die einen Felgenkörper 2 der Fahrzeugfelge 1 mit einem fahrzeugseitig anbringbaren Nabenkörper 21 verbindet. Die Speicheneinheit 22 weist auf übliche Weise mehrere Speichen auf, kann jedoch auch alternativ als Scheibe umgesetzt sein. Das Fahrzeugrad 20 ist als ein Rad eines Pkws umgesetzt, kann gemäß weiterer Ausführungen auch als Rad eines Busses, Lkws oder eines anderen Nutzfahrzeuges, aber auch von motorgetriebenen Krafträdern, wie Zweirädern, umgesetzt sein.

Das Fahrzeugrad 20 ist als ein so genanntes Hybridrad realisiert und weist neben dem Felgenkörper 2 aus Faserverbundmaterial die radial nach innen anschließenden, fest mit dem Felgenkörper 2 verbundene Speicheneinheit 22, die aus einem Metall (bevorzugt Leichtmetalllegierung) hergestellt ist, auf. Die Speicheneinheit 22 ist bevorzugt über Verschraubungen mit dem Felgenkörper 2 verbunden. In weiteren Ausführungen ist die Speicheneinheit 22 ebenfalls zumindest teilweise oder vollständig aus einem Faserverbundmaterial hergestellt und stoffschlüssig mit dem Felgenkörper 2 verbunden.

Die gegenständlich verwendeten Richtungsangaben sind in Bezug auf die zentrale Längsachse 13 / Drehachse zu sehen. Unter axial / axiale Richtung ist folglich eine Richtung entlang / parallel zu der Längsachse 13, unter radial / radiale Richtung eine Richtung senkrecht zu der Längsachse 13 und unter Umfangsrichtung eine Richtung entlang einer gedachten, konzentrisch zu der Längsachse 13 umlaufenden Kreislinie zu verstehen.

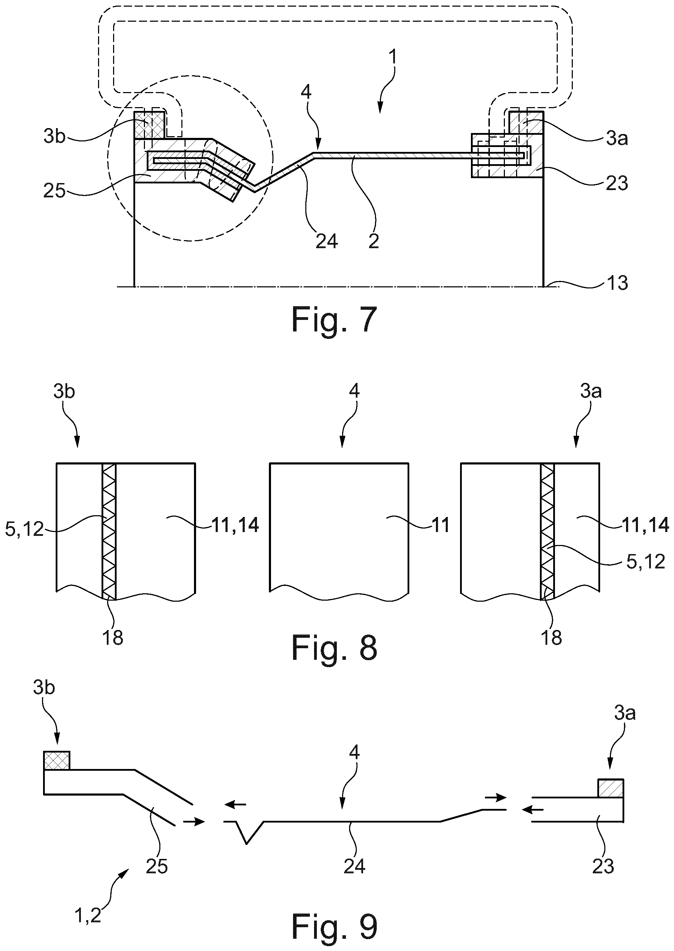

Auch ist in Fig. 7 der Aufbau des Felgenkörpers 2 der erfindungsgemäßen Fahrzeugfelge 1 aus mehreren Subpreforms 23, 24, 25 (auch als Vorformling bezeichnet) zu erkennen. Der Felgenkörper 2 besteht aus Faserverbundmaterial. Somit ist die jeweilige Subpreform 23, 24, 25 aus Faserverbundmaterial hergestellt. Diesbezüglich sei darauf hingewiesen, dass die Ausbildung des Felgenkörpers 2 nicht auf diese Mehrteiligkeit beschränkt ist und der Felgenkörper 2 in weiteren Ausführungen auch aus einer einzigen Subpreform / Preform oder nur zwei Subpreforms zusammensetzbar ist.

In den Fign. 7 und 9 ist zu erkennen, dass der Felgenkörper 2 zu jeweils einem axialen Ende einen Felgenhornbereich 3a, 3b aufweist. Die Felgenhornbereiche 3a, 3b sind durch einen Felgenbettbereich 4 miteinander verbunden. Es ist zu erkennen, dass die Felgenhornbereiche 3a, 3b und der Felgenbettbereich 4 jeweils aus einer Subpreform 23, 24, 25 gebildet sind, welche Subpreforms 23, 24, 25 bei der Herstellung des Felgenkörpers 2 zusammengefügt / verklebt werden. Die erste Subpreform 23 bildet den ersten Felgenhornbereich 3a, die dritte Subpreform 25 den zweiten Felgenhornbereich 3b und die zweite Subpreform 24 den Felgenbettbereich 4.

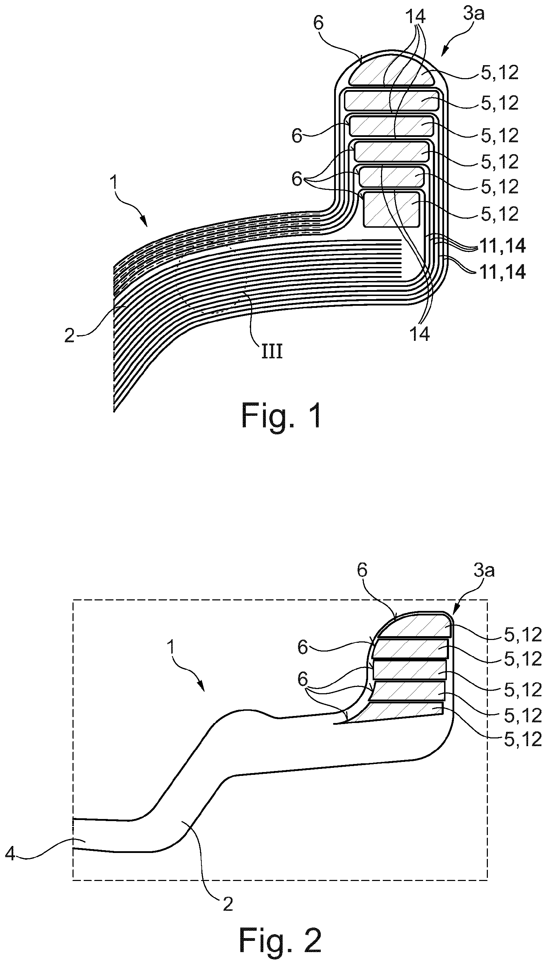

Mit den Fign. 1 bis 4 sind unterschiedliche Ausführungsbeispiele des Felgenkörpers 2 zu erkennen. In diesen Figuren ist der Übersichtlichkeit halber lediglich der erste Felgenhornbereich 3a dargestellt, wobei jedoch der zweite Felgenhornbereich 3b denselben Aufbau wie der erste Felgenhornbereich 3a aufweist.

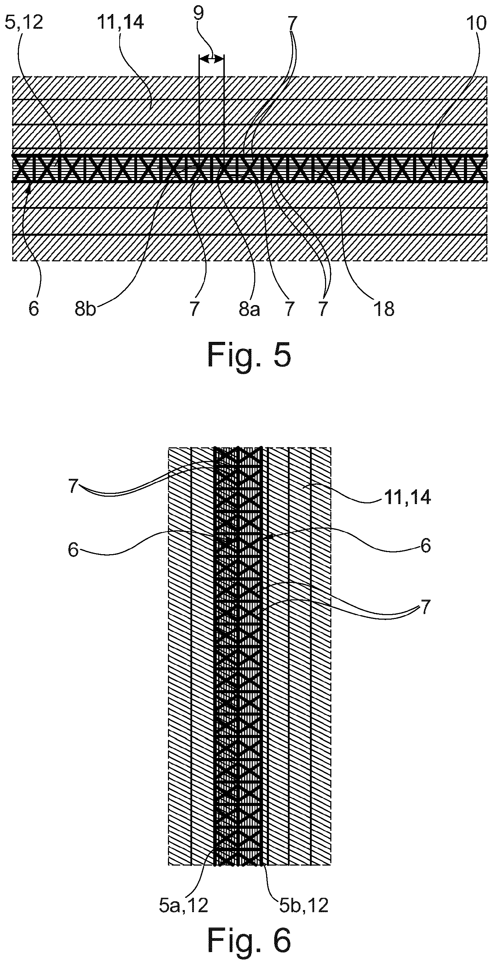

In dem ersten Ausführungsbeispiel nach Fig. 1 ist der erste Felgenhornbereich 3a durch mehrere radial übereinander angeordnete Fasermattenabschnitte 14 mit ausgebildet. Diese Fasermattenabschnitte 14 sind Bestandteil einer einzigen Fasermatte 11, wie sie auch in Fig. 5 abgewickelt dargestellt ist. Die Fasermatte 11 ist derart aufgewickelt und umgekrempelt, dass die Fasermattenabschnitte 14 zum einen den erste Felgenhornbereich 3a ausbilden, zum anderen zu einer radialen Innenseite sowie zu einer gemeinsamen axialen Seite hin zu dem Felgenbettbereich 4 hin verlaufen und mit diesem verbunden sind.

Radial zwischen den Fasermattenabschnitten 14 ist im Bereich des ersten Felgenhornbereiches 3a ein Faserbündel 5 angeordnet. In Fig. 1 ist eine so genannte einreihige Konfiguration zu erkennen, indem lediglich ein Faserbündel 5 in radialer Richtung aufgewickelt ist und mehrere radial geschachtelte / radial übereinander angeordnete Faserbündelabschnitte 12 bildet. Demzufolge ist es weiterhin bevorzugt, wenn die in Fig. 1 zu erkennenden radial übereinander angeordneten Faserbündelabschnitte 12 durch ein einziges Faserbündel 5 gebildet sind. Mit Fig. 5 ist diesbezüglich zu erkennen, dass das Faserbündel 5 vor dem Aufwickeln der Fasermatte 11 / dem Drapieren des ersten Felgenhornbereiches 3a auf der Fasermatte 11 fixiert wird.

In Fig. 1 ist das Faserbündel 5 im fertig hergestellten, ausgehärteten Zustand des Felgenkörpers 2 exemplarisch im Wesentlichen rechteckförmig sowie elliptisch realisiert, wobei diese Querschnittsform je nach Herstellprozess auch abweichen kann. Dies ist unter Zusammenschau der Fign. 1 bis 4 auch gut zu erkennen, wobei das oder die Faserbündel 5 auch keilförmige Querschnittsformen aufweisen kann / können.

In dem zweiten Ausführungsbeispiel nach Fig. 2 ist etwa gezeigt, dass der radial äußerste und der radial innerste Faserbündelabschnitt 12 eine die Außenkontur des Felgenkörpers 2 beschreibende Keilform aufweisen können. Der weitere Aufbau der in Fig. 2 dargestellten Fahrzeugfelge 1 entspricht jedoch dem ersten Ausführungsbeispiel.

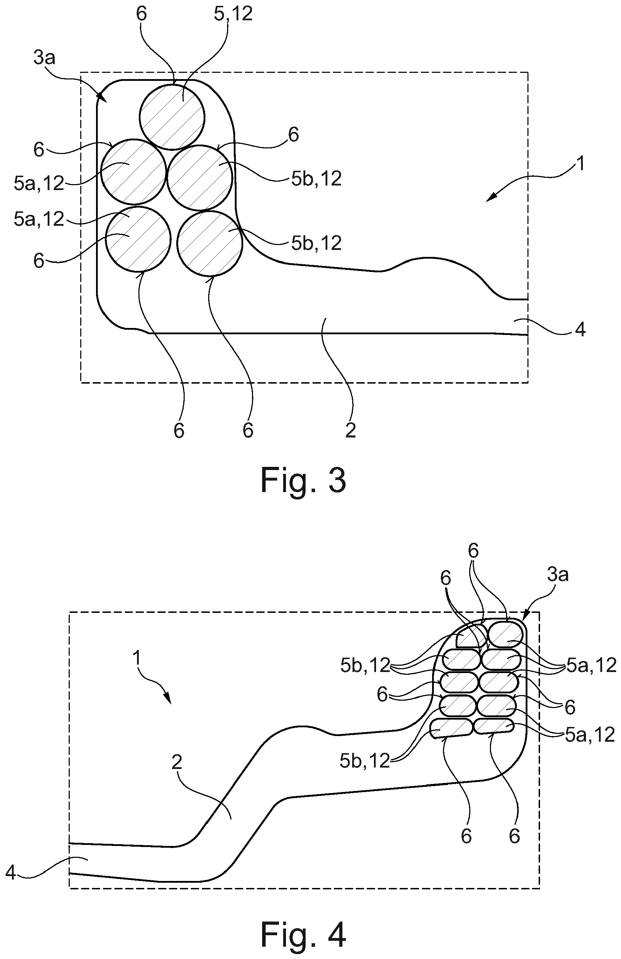

Des Weiteren geht aus den Fign. 3 und 4 hervor, dass auch mehrere Faserbündel 5, hier als ein erstes Faserbündel 5a und ein zweites Faserbündel 5b gekennzeichnet, in dem ersten Felgenhornbereich 3a einsetzbar sind, welche Faserbündel 5a, 5b axial nebeneinander auf dem jeweiligen Fasermattenabschnitt 14 nach Fig. 6 angeordnet sind. Die Faserbündel 5a, 5b bilden somit mehrere radial geschachtelte Reihen mit Faserbündelabschnitten 12 aus.

In dem dritten Ausführungsbeispiel nach Fig. 3 sind zwei Reihen mit zwei Fasermattenabschnitten 14 umgesetzt, die nochmals radial von außen von einem einzelnen Fasermattenabschnitt 14 / Faserbündel 5 umgeben sind.

In dem vierten Ausführungsbeispiel nach Fig. 4 sind gar fünf Reihen mit zwei Fasermattenabschnitten 14 umgesetzt. Der weitere Aufbau der Fahrzeugfelge 1 der Fign. 3 und 4 entspricht wiederum dem ersten Ausführungsbeispiel.

Mit den Fign. 5 und 6 ist die erfindungsgemäße Kompressionsumhüllung 6 des jeweiligen Faserbündels 5, wie es in den Fign. 1 bis 4 alleine oder mehrfach eingesetzt ist, zu erkennen.

Erfindungsgemäß weist das zumindest eine Faserbündel 5 die Kompressionsumhüllung 6 auf. Die Kompressionsumhüllung 6 ist durch mehrere Fäden 7, die die Faserbündel 5 umhüllen, umgesetzt. Die Fäden 7 sind derart um die Faserbündel 5 gewickelt, dass sie deren Einzelfäden in radialer Richtung komprimieren. Die Kompressionsumhüllung 6 weist zumindest zwei, hier vier, sich kreuzende Fäden 7 auf, die sich regelmäßig in Längsrichtung des Faserbündels 5 kreuzen. In weiteren Ausführungen sind bevorzugt auch zwei, sechs oder acht Fäden 7 eingesetzt.

In Fig. 5 ist gut zu erkennen, dass ein Abstand 9 zwischen zwei entlang einer Mantellinie 10 des Faserbündels 5 gesehen unmittelbar aufeinanderfolgenden Kreuzungspunkten 8a, 8b der Fäden 7 in dieser Ausführung 5 mm beträgt.

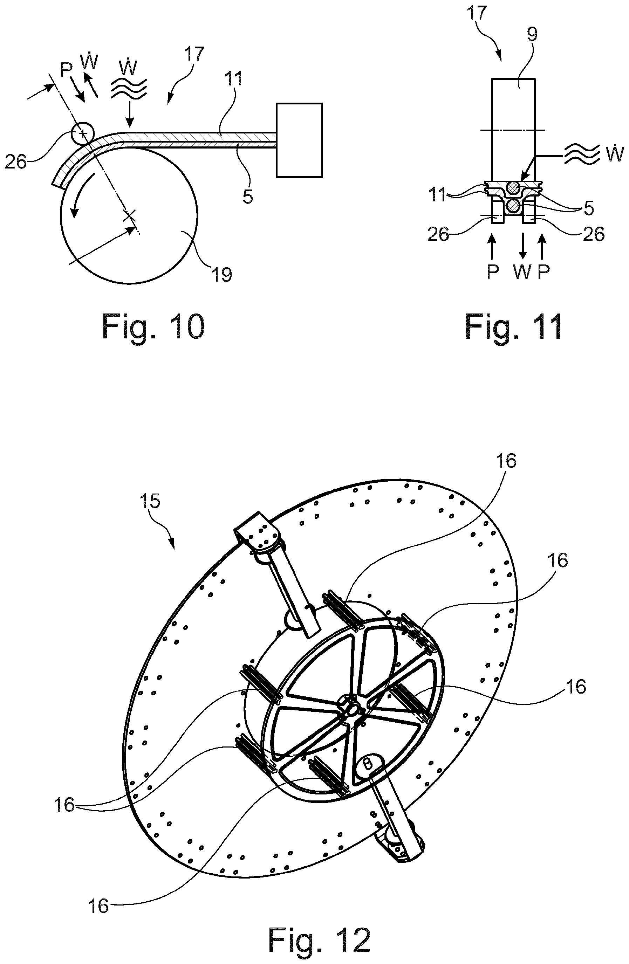

Das Faserbündel 5 ist aus mehreren einzelnen, hier elf, Rovings zusammengesetzt, die in Längsrichtung miteinander verdrillt sind. In Verbindung mit Fig. 12 ist diesbezüglich ein entsprechendes Umwickelverfahren des Faserbündels 5 angedeutet. Das Faserbündel 5 wird zentral einer Umwickelvorrichtung 15 zugeführt und dabei durch die auf bewegbaren Spindelträgern 16 aufgewickelten Fäden 7 umwickelt. Die entsprechenden Spindelträger 16 sind zur Aufbringung der Kompression entsprechend vorgespannt. Während die Rovings / das Faserbündel 5 in den vorliegenden Ausführungsbeispielen aus Kohlefaser bestehen, bestehen die Fäden 7 aus Glasfaser. Es sind jedoch auch in weiteren Ausführungen andere Fasern realisierbar.

Das Faserbündel 5 ist in der Ausführung nach Fig. 5 auf die Fasermatte 11 aufgenäht. Eine Naht ist mit dem Bezugszeichen 18 gekennzeichnet (Fig. 8). Die Naht 18 ist als Zickzack-Naht oder als Dreifach-Zickzack-Naht umgesetzt. In der Ausführung nach Fig. 6 sind die beiden parallel nebeneinander verlaufenden Faserbündel 5a, 5b ebenfalls auf die Fasermatte 11 aufgenäht.

Als bevorzugt hat es sich herausgestellt, wenn die Fasermatte 11 mit den aufgenähten Faserbündeln 5 eine derartige Länge aufweist, dass diese schlicht mehrfach, etwa drei-, vier-, fünf- oder sechsmal aufgewickelt wird, um den in den Fign. 1 bis 4 zu erkennenden ersten Felgenhornbereich 3a zu bilden. Zu einer radialen Innenseite bzw. zu einer axialen Seite des Faserbündels 5 hin sind die überstehenden Fasermattenabschnitte 14, wie bereits erwähnt, schlicht mit dem Felgenbettbereich 4 weiter verklebt.

Mit Fig. 8 ist auch zu erkennen, dass der Felgenbettbereich 4 schlicht aus einer Fasermatte 11 bzw. aus mehreren übereinander gelegten Fasermatten / Fasermattenabschnitten 14 gebildet ist.

Hinsichtlich der Fasermatte 11 sei zudem darauf hingewiesen, dass diese bevorzugt an eine NCF-Matte realisiert ist, in weiteren Ausführungen jedoch auch auf andere Weise ausbildbar ist. Die Fasermatte 11 besteht aus einem biaxialen Fadengelege (hier +/-45°-Fadengelege) und ist ebenfalls aus Kohlefaser hergestellt. In weiteren Ausbildungen sind jedoch auch andere Fasern, etwa Glasfasern oder Aramidfasern, für die Fasermatte 11 verwendet.

Hinsichtlich eines Herstellverfahrens der Fahrzeugfelge 1 sei darauf hingewiesen, dass im Anschluss an die Umhüllung der Faserbündel 5 mit der Kompressionsumhüllung 6 auf typische Weise das Aufnähen der Faserbündel 5 auf die Fasermatte 11 erfolgt. Nach diesem Aufnähen wird die Fasermatte 11 zusammen mit den Faserbündeln 5 mehrmals aufgewickelt, wobei bevorzugt die in den Fign. 10 und 11 zu erkennende Aufwickelvorrichtung 17 verwendet ist. Analog zu dem Drapieren des ersten Felgenhornbereiches 3a findet das Drapieren des zweiten Felgenhornbereiches 3b statt. Die Felgenhornbereiche 3a und 3b werden dann mit dem Felgenbettbereich 4 nach Fig. 9 verbunden und unter Ausbildung des Felgenkörpers 2 konsolidiert. Genauer gesagt wird zur Herstellung des Felgenkörpers 2 / der Verbindung der Subpreformen 23, 24, 25 ein Binderpulver verwendet. Ein Harz kommt dann bei einer Injektion der schon zusammengesetzten Subpreformen 23, 24, 25 (Preform), unter Umsetzung einer RTM-Injektion, dazu. Das Binderpulver löst sich dann während der Injektion im Harzgemisch auf.

**Bezugszeichenliste**

| 1 | Fahrzeugfelge |
| 2 | Felgenkörper |
| 3a | erster Felgenhornbereich |
| 3b | zweiter Felgenhornbereich |
| 4 | Felgenbettbereich |
| 5 | Faserbündel |
| 5a | erstes Faserbündel |
| 5b | zweites Faserbündel |
| 6 | Kompressionsumhüllung |
| 7 | Faden |
| 8a | erster Kreuzungspunkt |
| 8b | zweiter Kreuzungspunkt |
| 9 | Abstand |
| 10 | Mantellinie |
| 11 | Fasermatte |

12 Faserbündelabschnitt
13 Längsachse
14 Fasermattenabschnitt
15 Umwickelvorrichtung
16 Spindelträger
17 Aufwickelvorrichtung
18 Naht
19 Wickelrolle
20 Fahrzeugrad
21 Nabenkörper
22 Speicheneinheit
23 erste Subpreform
24 zweite Subpreform
25 dritte Subpreform
26 Rolle

**Patentansprüche**

1. Fahrzeugfelge (1) mit einem Felgenkörper (2) aus Faserverbundmaterial, wobei der Felgenkörper (2) zwei Felgenhornbereiche (3a, 3b) und einen die beiden Felgenhornbereiche (3a, 3b) verbindenden Felgenbettbereich (4) aufweist, und wobei zumindest ein Felgenhornbereich (3a, 3b) durch wenigstens ein Faserbündel (5) verstärkt ist, **dadurch gekennzeichnet, dass** das wenigstens eine Faserbündel (5) von einer Kompressionsumhüllung (6) umgeben ist.

2. Fahrzeugfelge (1) nach Anspruch 1, **dadurch gekennzeichnet, dass** das wenigstens eine Faserbündel (5) verdrillt ist.

3. Fahrzeugfelge (1) nach Anspruch 1 oder 2, **dadurch gekennzeichnet, dass** die Kompressionsumhüllung (6) als eine Umwicklung oder eine Umflechtung ausgebildet ist.

4. Fahrzeugfelge (1) nach einem der Ansprüche 1 bis 3, **dadurch gekennzeichnet, dass** die Kompressionsumhüllung (6) zumindest zwei sich kreuzende Fäden (7) aufweist.

5. Fahrzeugfelge (1) nach Anspruch 4, **dadurch gekennzeichnet, dass** ein Abstand (9) zwischen zwei entlang einer Mantellinie (10) des wenigstens einen Faserbündels (5) unmittelbar aufeinanderfolgenden Kreuzungspunkten (8a, 8b) der zumindest zwei Fäden (7) zwischen 2 mm und 8 mm beträgt.

6. Fahrzeugfelge (1) nach einem der Ansprüche 1 bis 5, **dadurch gekennzeichnet, dass** die Kompressionsumhüllung (6) durch Glasfasern oder thermoplastischen Fasern ausgebildet ist.

7. Fahrzeugfelge (1) nach einem der Ansprüche 1 bis 6, **dadurch gekennzeichnet, dass** das wenigstens eine Faserbündel (5) auf einer den zumindest einen Felgenhornbereich (3a, 3b) mit ausbildenden Fasermatte (11) aufgenäht ist.

8. Fahrzeugfelge (1) nach einem der Ansprüche 1 bis 7, **dadurch gekennzeichnet, dass** der zumindest eine Felgenhornbereich (3a, 3b) mehrere axial und/oder radial nebeneinander angeordnete Faserbündel (5a, 5b) aufweist.

9. Fahrzeugfelge (1) nach einem der Ansprüche 1 bis 8, **dadurch gekennzeichnet, dass** der zumindest eine Felgenhornbereich (3a, 3b) mehrere radial geschachtelte Faserbündelabschnitte (12) aufweist.

10. Fahrzeugrad (20) mit einer Fahrzeugfelge (1) nach einem der Ansprüche 1 bis 9 und einer mit dem Felgenkörper (2) verbundenen, hin zu einem Nabenkörper (21) führenden Speicheneinheit (22).

11. Verfahren zum Herstellen einer Fahrzeugfelge (1) mit einem Felgenkörper (2) aus Faserverbundmaterial, wobei wenigstens ein Faserbündel (5) zur Verfügung gestellt wird, das unter Erfahrung einer Verdichtung mit einer Kompressionsumhüllung (6) versehen wird, woraufhin das wenigstens eine Faserbündel (5) auf einer Fasermatte (11) aufgenäht wird, die Fasermatte (11) mit dem wenigstens einen Faserbündel (5) unter Ausbildung eines Felgenhornbereiches (3a, 3b) drapiert wird und schließlich der Felgenkörper (2) ausgehärtet wird.

**Claims**

1. A vehicle rim (1) having a rim body (2) made from a fiber composite material, the rim body (2) having two rim flange areas (3a, 3b) and a rim bed area (4) connecting the two rim flange areas (3a, 3b), and at least one rim flange area (3a, 3b) being reinforced by at least one fiber bundle (5), **characterized in that** the at least one fiber bundle (5) is surrounded by a compression wrap (6).

2. The vehicle rim (1) according to claim 1, **characterized in that** the at least one fiber bundle (5) is twisted.

3. The vehicle rim (1) according to claim 1 or 2, **characterized in that** the compression wrap (6) is made as an envelopment or a braid.

4. The vehicle rim (1) according to one of the claims 1 to 3, **characterized in that** the compression wrap (6) has at least two intersecting threads (7).

5. The vehicle rim (1) according to claim 4, **characterized in that** a distance (9) between two crossing points (8a, 8b) of the at least two threads (7) directly following one another along a surface line (10) of the at least one fiber bundle (5) is between 2 mm and 8 mm.

6. The vehicle rim (1) according to one of the claims 1 to 5, **characterized in that** the compression wrap (6) is made by glass fibers or thermoplastic fibers.

7. The vehicle rim (1) according to one of the claims 1 to 6, **characterized in that** the at least one fiber bundle (5) is sewn onto a fiber mat (11), which helps to form the at least one rim flange area (3a, 3b).

8. The vehicle rim (1) according to one of the claims 1 to 7, **characterized in that** the at least one rim flange area (3a, 3b) has multiple fiber bundles (5a, 5b) arranged axially and/or radially next to one another.

9. The vehicle rim (1) according to one of the claims 1 to 8, **characterized in that** the at least one rim flange area (3a, 3b) has multiple radially nested fiber bundle portions (12).

10. A vehicle wheel (20) with a vehicle rim (1) according to one of the claims 1 to 9 and a spoke unit (22) connected to the rim body (2) and extending to a hub body (21).

11. A method for producing a vehicle rim (1) having a rim body (2) made from a fiber composite material, at least one fiber bundle (5) being made available, which is provided with a compression wrap (6) while experiencing compression, whereupon the at least one fiber bundle (5) is sewn onto a fiber mat, the fiber mat is draped with the at least one fiber bundle (5) to form a rim flange area (3a, 3b), and finally the rim body (2) is cured.


**Revendications**

1. Jante de véhicule (1) avec un corps de jante (2) en matériau composite fibreux, dans laquelle le corps de jante (2) présente deux zones de rebord de jante (3a, 3b) et une zone de base de jante (4) connectant les deux zones de rebord de jante (3a, 3b), et dans laquelle au moins une zone de rebord de jante (3a, 3b) est renforcée par au moins un faisceau de fibres (5), **caractérisée en ce que** l'au moins un faisceau de fibres (5) est entouré par une enveloppe de compression (6).

2. Jante de véhicule (1) selon la revendication 1, **caractérisée en ce que** l'au moins un faisceau de fibres (5) est torsadé.

3. Jante de véhicule (1) selon la revendication 1 ou 2, **caractérisée en ce que** l'enveloppe de compression (6) est conçue comme un enroulement ou une tresse.

4. Jante de véhicule (1) selon l'une quelconque des revendications 1 à 3, **caractérisée en ce que** l'enveloppe de compression (6) présente au moins deux fils (7) se croisant.

5. Jante de véhicule (1) selon la revendication 4, **caractérisée en ce qu'**une distance (9) entre deux points d'intersection (8a, 8b) des au moins deux fils (7) se succédant directement le long d'une génératrice (10) de l'au moins un faisceau de fibres (5) est comprise entre 2 mm et 8 mm.

6. Jante de véhicule (1) selon l'une quelconque des revendications 1 à 5, **caractérisée en ce que** l'enveloppe de compression (6) est formée par des fibres de verre ou des fibres thermoplastiques.

7. Jante de véhicule (1) selon l'une quelconque des revendications 1 à 6, **caractérisée en ce que** l'au moins un faisceau de fibres (5) est cousu sur une nappe de fibres (11) formant l'au moins une zone de rebord de jante (3a, 3b).

8. Jante de véhicule (1) selon l'une quelconque des revendications 1 à 7, **caractérisée en ce que** l'au moins une zone de rebord de jante (3a, 3b) présente plusieurs faisceaux de fibres (5a, 5b) disposés axialement et/ou radialement côte à côte.

9. Jante de véhicule (1) selon l'une quelconque des revendications 1 à 8, **caractérisée en ce que** l'au moins une zone de rebord de jante (3a, 3b) présente plusieurs sections de faisceau de fibres (12) imbriquées radialement.

10. Roue de véhicule (20) avec une jante de véhicule (1) selon l'une quelconque des revendications 1 à 9 et une unité de stockage (22) connectée au corps de jante (2) et menant vers un corps de moyeu (21).

11. Procédé de fabrication d'une jante de véhicule (1) avec un corps de jante (2) en matériau composite fibreux, dans lequel au moins un faisceau de fibres (5) est mis à disposition, qui est doté d'une enveloppe de compression (6) en subissant une compression, puis l'au moins un faisceau de fibres (5) est cousu sur une nappe de fibres (11), la nappe de fibres (11) est drapée avec l'au moins un faisceau de fibres (5) en formant une zone de rebord de jante (3a, 3b) et enfin le corps de jante (2) est durci.

Fig. 1

Fig. 2

Fig. 3

Fig. 4

Fig. 5

Fig. 6

## Fig. 7

## Fig. 8

## Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016128289 A1